# EUROPEAN PATENT APPLICATION

(11) **EP 3 246 902 A1**
(43) Date of publication of application: **22.11.2017**
(21) Application number: 17171621.0
(22) Date of filing: 18.05.2017
(51) Int. Cl.: G09F 9/33

(54) **DISPLAY DEVICE**

(30) Priority: 19.05.2016 CN 201610333033
(71) Applicant: Young Optics Inc., Taiwan (TW)
(72) Inventor: SHYU, Jyh-Horng, Hsinchu Science Park (TW); CHEN, Yi-Hsueh, Hsinchu Science Park (TW)
(74) Representative: Lang, Christian

(57) **Abstract**

One embodiment of the invention discloses a display device (10) including a plurality of point light sources (12), a matte structure (16) and a lens array (14). Each two adjacent point light sources (12) is spaced part by a gap (P), and the matte structure (16) is disposed on a light exit side of the point light sources (12). The lens array (14) is disposed on one side of the matte structure (16) and has a plurality of lenses (14a) with positive refractive power.

## Description

### BACKGROUND OF THE INVENTION

### a. Field of the Invention

The invention relates to a display device.

### b. Description of the Related Art

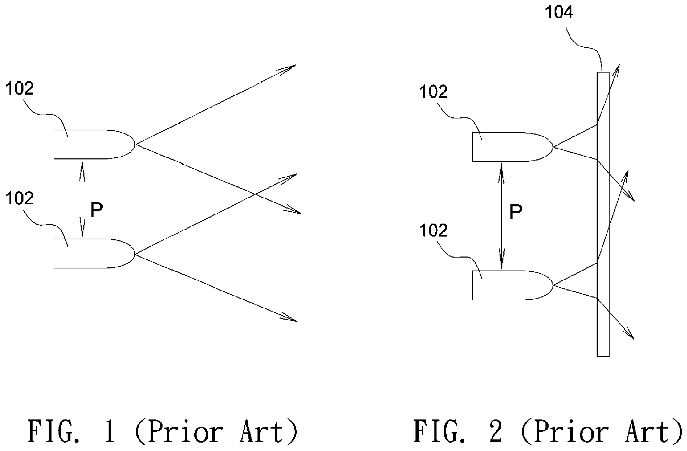

Nowadays, a display device having point light source arrays, such as a large-scale LED billboard, may arrange multiple illuminated LEDs to display texts or graphics. To maintain package pitches among LEDs and provide sufficient heat-dissipation capabilities, however, two adjacent LEDs have to be spaced apart by a gap. Under the circumstance, when a viewer sees an image at a short distance from the display device, discontinuous light spots may be apparently seen to deteriorate visual effects. For example, as illustrated in FIG. 1, since two adjacent LEDs 102 are spaced apart by a gap P, the multiple LEDs 102 are seen as isolated light spots when a viewer sees an image at a short distance from the display device. Therefore, as shown in FIG. 2, a diffuser plate 104 may be disposed on a light exit side of the LEDs 102 to improve image qualities. Specifically, the diffuser plate 104 may diffuse light beams emitted from the LEDs 102 to reduce dead zones among adjacent pixels (LEDs) and thus improve image qualities. However, the light beams passing through the diffuser plate 104 are diffused at larger angles to decrease the image brightness, and the image brightness is particularly deteriorated as the viewer is far away from the display device.

### BRIEF SUMMARY OF THE INVENTION

According to one aspect of the present disclosure, a display device includes a plurality of point light sources, a matte structure and a lens array. Each two adjacent point light sources is spaced part by a gap, and the matte structure is disposed on a light exit side of the plurality of point light sources. The lens array is disposed on one side of the matte structure and has a plurality of lenses with positive refractive power.

According to another aspect of the present disclosure, a display device includes a plurality of point light sources, a matte structure and a lens array. Each two adjacent point light sources is spaced part by a gap, and the matte structure is disposed on a light exit side of the plurality of point light sources. The lens array is disposed on the light exit side of the plurality of point light sources and adjacent to the matte structure, and the lens array has a plurality of lenses with positive refractive power in one-to-one correspondence with the plurality of point light sources.

According to another aspect of the present disclosure, a display device includes a plurality of point light sources, a light diffuser and a lens array. Each two adjacent point light sources is spaced part by a gap, and the light diffuser is disposed on a light exit side of the plurality of point light sources. The lens array is disposed on the light exit side of the plurality of point light sources and adjacent to the light diffuser. The lens array has a plurality of lenses with positive refractive power arranged corresponding to positions of the point light sources.

According to the above embodiments, because the light diffuser may diffuse light beams emitted from the point light sources to reduce or eliminate the dead zones among adjacent pixels, discontinuous light spots that can be clearly seen at a short distance from the display device are blurred to improve image qualities and visual effects. Besides, the lens array with positive refractive power may converge light beams to reduce light dispersion and thus prevent light beams from being excessively dispersed to severely lower the display brightness. Therefore, the light diffuser and the lens array may be paired and cooperated to pass the light beams emitted from the illuminated point light sources to form a high quality image viewed at a short distance from the display device and allow for sufficient display brightness and a proper visual range.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 shows a schematic diagram illustrating a conventional display device.
FIG. 2 shows a schematic diagram illustrating another conventional display device.
FIG. 3 shows a schematic diagram illustrating a display device according to an embodiment of the invention.
FIG. 4 shows a schematic diagram illustrating light cones of point light sources according to an embodiment of the invention.
FIG. 5 shows a schematic diagram illustrating a display device according to another embodiment of the invention.
FIG. 6 shows a schematic diagram illustrating a display device according to another embodiment of the invention.
FIG. 7 shows a schematic diagram illustrating a display device according to another embodiment of the invention.
FIG. 8 illustrates an illuminance distribution curve N of the point light sources and an illuminance distribution curve Q of light beams that emitted from the point light sources and pass through the light diffuser.
FIG. 9 illustrates an illuminance distribution curve N of the point light sources and an illuminance distribution curve R of light beams that emitted from the point light sources and pass through the lens array with positive refractive power and the light diffuser.

### DETAILED DESCRIPTION OF THE INVENTION

In the following detailed description of the preferred embodiments, directional terminology, such as "front," "back," etc., is used with reference to the orientation of the Figure(s) being described instead of limiting the scope of the present invention.

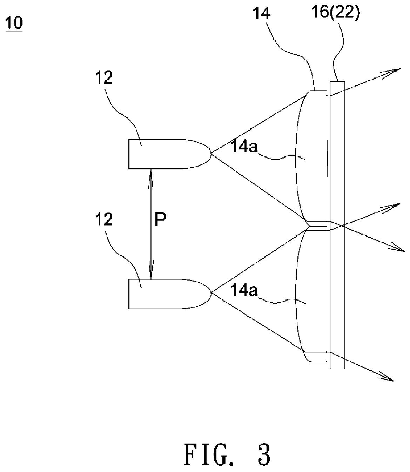

FIG. 3 shows a schematic diagram illustrating a display device according to an embodiment of the invention. As shown in FIG. 3, a display device 10 includes multiple point light sources 12, a lens array 14 and a light diffuser 16 (such as a diffuser plate 22, a diffuser surface, or a matte structure). Each two adjacent point light sources 12 are spaced apart by a gap P, and each point light source 12 may be optionally lit up or extinguished. Therefore, in one embodiment, multiple illuminated point light sources 12 may be arranged to display information, with each illuminated point light source 12 serving as a pixel of texts or graphics to be displayed. The light diffuser 16 is disposed on a light exit side of the point light sources 12.
The point light sources 12 are arranged to form texts or graphics that are shown on the light diffuser 16 as a visible image. Because two adjacent point light sources 12 are spaced apart by a gap P, dead zones without displaying effects may exist among adjacent pixels. Therefore, the light diffuser 16 may diffuse light beams emitted from each of the point light sources 12 to reduce or eliminate the dead zones among adjacent pixels. As a result, discontinuous light spots that can be clearly seen at a short distance from the display device 10 are blurred to improve image qualities and visual effects. The lens array 14 is disposed on a light exit side of the point light sources 14 and has a plurality of lenses 14a with positive refractive power to lower a degree of divergence of the light beams passing through the lens array 14. The lenses 14a may be arranged corresponding to positions of the point light sources 12. Therefore, the convergent effects of the lens array 14 may enhance light-utilization efficiency, image brightness and a visual range and may compensate for the light loss as a result of the dispersion of the light diffuser 16. In one embodiment, the lenses 14a are in one-to-one correspondence with the point light sources 12. In one embodiment, a half angle (an off-axis angle where the luminous intensity is half the intensity at direct on-axis view) of each of the point light sources is in the range of 25-75 degrees, and a diffusion angle of the light diffuser 16 is in the range of 30-60 degrees. Herein, the diffusion angle of the light diffuser 16 is equal to a difference between an incident angle and an emergent angle for a light beam passing through the light diffuser 16. In one embodiment, the selection of a half angle of the lens array 14 may be matched with the selection of a diffusion angle of the light diffuser 16. For example, a lens array 14 having a large half angle may be paired with a light diffuser 16 having a small diffusion angle, and a lens array 14 having a small half angle may be paired with a light diffuser 16 having a large diffusion angle to restrict an emission angle of the entire display device 10 to be smaller than 90 degrees, thus preventing emerging light beams from exceeding a visual range.

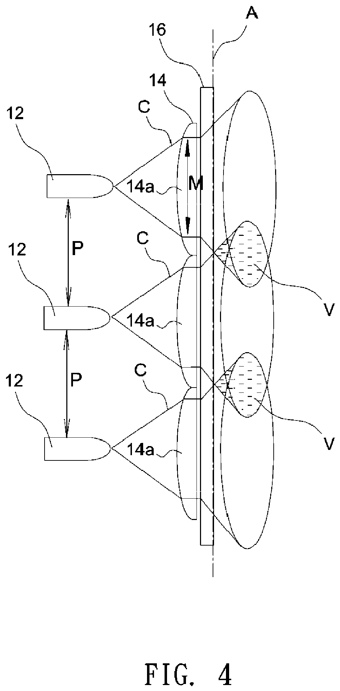

FIG. 4 shows a schematic diagram illustrating light cones of point light sources according to an embodiment of the invention. As shown in FIG. 4, each of the illuminated point light sources 12 forms a light cone C, and two adjacent light cones C begin to interfere with each other at a threshold position A to form an overlapping region V (indicated by hatched lines). In this embodiment, the light diffuser 16 may be disposed to substantially overlap the threshold position A. Each lens 14a of the lens array 14 may correspond to one point light source 12 and cover a projection area M of one light cone C on the lens array 14. In an alternate embodiment (not shown), multiple lens 14a of the lens array 14 may correspond to one point light source 12. Note the lenses 14a may be in one-to-one, one-to-many or many-to-one correspondence with the plurality of point light sources 12 and are not limited to a particular arrangement. According to the alignment design of above embodiments, dead zones among pixels can be further reduced and improved display brightness is maintained. Further, in one embodiment, no optics with refractive power is disposed in a light path between the light diffuser 16 and the lens array 14 to prevent the light propagation between the light diffuser 16 and the lens array 14 from being influenced by other optics. Certainly, in an alternate embodiment, optics with refractive power may be disposed in a light path between the light diffuser 16 and the lens array 14.

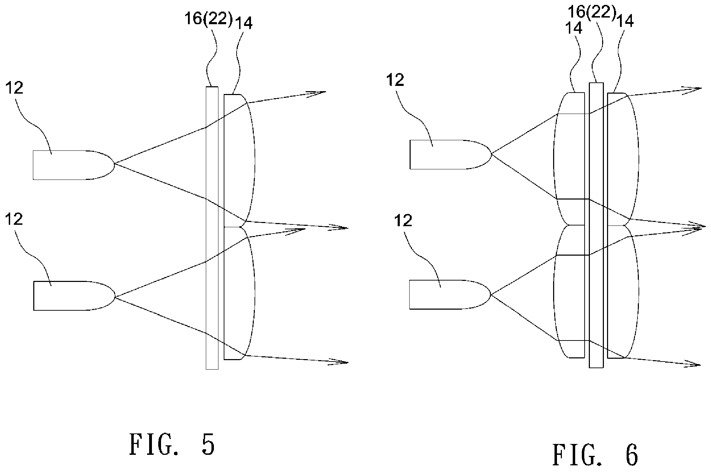

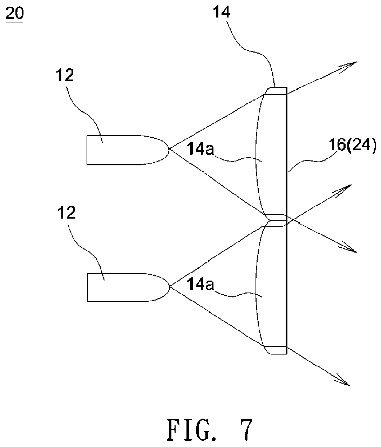

According to the above embodiments, the light diffuser 16 is simply for scattering and the lens array 14 for converging incoming light beams, and they are not limited to any particular structure, material and shape. The light diffuser 16 may be a matte structure formed on various mediums, and the matte structure may be a matte surface, a matte glass, or a frosted glass. For example, a matte structure may be formed on a sheet body or a plate body to form the diffuser plate 22. The lens array 14 may be disposed on one side of the diffuser plate 22 facing the point light sources 12 (FIG. 3) or facing away from the point light sources 12 (FIG. 5). Alternatively, as shown in FIG. 6, the lens array 14 may be disposed on both side of the diffuser plate 22. In another embodiment shown in FIG. 7, the matte structure may be directly formed on one side of the lens array 14 to form a light-diffusing finish 24 to omit the diffuser plate 16 an hence reduce an occupied space of the display device 20. The light-diffusing finish 24 is not limited to be formed in a particular position. For example, the light-diffusing finish 24 may be formed on one side of the lens array 14 facing away from the point light sources 12 (FIG. 7). Alternatively, similar to the embodiments of the diffuser plate 22 shown in FIG. 5 and FIG. 6, the light-diffusing finish 24 may be formed on one side of the lens array 14 facing the point light sources 12 or formed on two surfaces facing each other and respectively on two lens arrays 14 placed side-by-side. Further, the point light sources 12 may include, but are not limited to, LEDs and laser diodes.

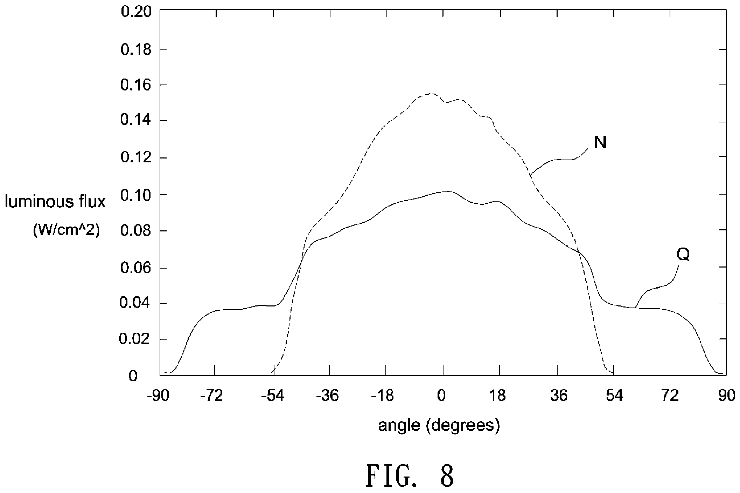

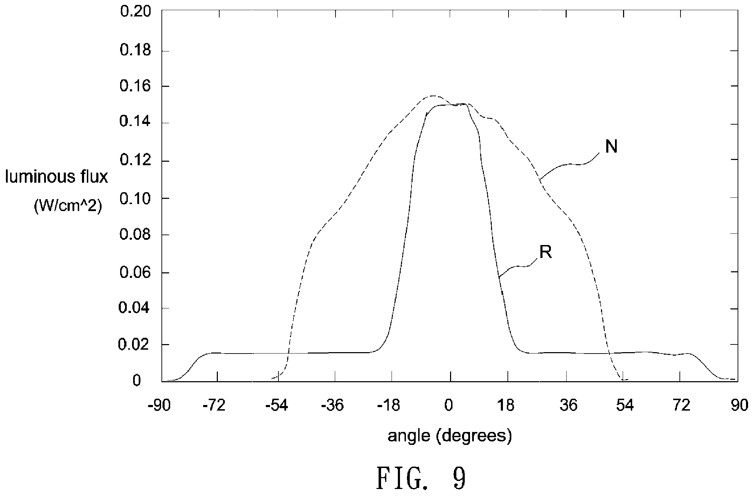

FIG. 8 illustrates an illuminance distribution curve N of the point light sources 12 and an illuminance distribution curve Q of light beams that emitted from the point light sources 12 and pass through the light diffuser 16. As shown in FIG. 8, a half angle is increased from about 54 degrees to about 90 degrees when light beams emitted from the point light sources 12 pass through the light diffuser 16. Therefore, the dead zones among adjacent point light sources 12 can be minimized. FIG. 9 illustrates an illuminance distribution curve N of the point light sources 12 and an illuminance distribution curve R of light beams that emitted from the point light sources 12 and pass through the lens array 14 with positive refractive power and the light diffuser 16. As be clearly seen in FIG. 9, light beams passing through the lens array 14 with positive refractive power and the light diffuser 16 are apparently converged by the lens array 14 to enhance display brightness. In one embodiment, a half angle of the point light source 12 may reach 54 degrees, and the lens array 14 together with the light diffuser 16 may increase an emission angle to near 90 degrees while keeping most light beams to propagate within a range of 18 degrees.

According to the above embodiments, because the light diffuser may diffuse light beams emitted from the point light sources to reduce or eliminate the dead zones among adjacent pixels, discontinuous light spots that can be clearly seen at a short distance from the display device are blurred to improve image qualities and visual effects. Besides, the lens array with positive refractive power may converge light beams to reduce light dispersion and thus prevent light beams from being excessively dispersed to severely lower the display brightness. Therefore, the light diffuser and the lens array may be paired and cooperated to pass the light beams emitted from the illuminated point light sources to form a high quality image viewed at a short distance from the display device and allow for sufficient display brightness and a proper visual range.

Though the embodiments of the invention have been presented for purposes of illustration and description, they are not intended to be exhaustive or to limit the invention. Accordingly, many modifications and variations without departing from the spirit of the invention or essential characteristics thereof will be apparent to practitioners skilled in this art. It is intended that the scope of the invention be defined by the claims appended hereto and their equivalents in which all terms are meant in their broadest reasonable sense unless otherwise indicated.

## Claims

1. A display device, comprising:
a plurality of point light sources, each two adjacent point light sources being spaced part by a gap;
a light diffuser disposed on a light exit side of the plurality of point light sources; and
a lens array disposed on one side of the light diffuser and having a plurality of lenses with positive refractive power.

2. The display device as claimed in claim 1, wherein the lens array disposed on the light exit side of the plurality of point light sources and adjacent to the light diffuser.

3. The display device as claimed in claims 1 to 2, wherein the plurality of lenses are in one-to-one correspondence with the plurality of point light sources.

4. The display device as claimed in claims 1 to 3, wherein the light diffuser is selected from the group consisting of a diffuser plate, a diffuser surface and a matte structure.

5. The display device as claimed in claim 4, wherein the matte structure is selected from the group consisting of a matte surface, a matte glass and a frosted glass.

6. The display device as claimed in claims 1 to 5, wherein no optics with refractive power is disposed in a light path between the light diffuser and the lens array.

7. The display device as claimed in claims 1 to 6, wherein the lens array is disposed on only one side or both sides of the light diffuser.

8. The display device as claimed in claims 1 to 7, wherein a half angle of each of the point light sources is in the range of 25-75 degrees, and a diffusion angle of the light diffuser is in the range of 30-60 degrees.

9. The display device as claimed in claims 1 to 8, wherein the light diffuser is a light-diffusing finish formed on at least one side of the lens array.

10. A display device substantially as described herein with reference to the drawings.
